# FASCICULE DE BREVET EUROPEEN

(11) **EP 2 440 605 B1**
(45) Date de publication et mention de la délivrance du brevet: **06.11.2013**
(21) Numéro de dépôt: 09779689.0
(22) Date de dépôt: 09.06.2009
(51) Int. Cl.: C08J 7/04, C08J 9/36

(54) **REVETEMENT DE SURFACE MULTICOUCHE AVEC COUCHE SUPPORT MOUSSEE**
MEHRSCHICHTIGE OBERFLÄCHENBESCHICHTUNG MIT ERWEITERTER TRÄGERSCHICHT
MULTILAYER SURFACE COATING WITH EXPANDED SUPPORTING LAYER

(43) Date de publication de la demande: 18.04.2012
(73) Titulaire: Tarkett G.D.L. S.a., 9779 Lentzweiler (LU)
(72) Inventeur: SICHE, Alexandre, L-9559 Wiltz (LU); SIMON, Jean-Yves, B-6810 Chiny (BE)
(74) Mandataire: Pronovem
(86) Numéro de dépôt international: PCT/EP2009/057109
(87) Numéro de publication internationale: WO 2010/142326

(56) Documents cités:
- FR-A- 1 440 797
- GB-A- 1 366 702
- GB-A- 1 384 791

## Description

### Objet de l'invention

La présente invention se rapporte à un procédé de fabrication d'un revêtement de surface multicouche à base de PVC comprenant une couche support moussée.

### Etat de la technique

Pour la décoration intérieure ou extérieure d'une surface, par exemple d'un bâtiment, d'une habitation, ou d'un véhicule, les revêtements de surface décoratifs à base de polychlorure de vinyle (PVC) sont bien connus et sont largement utilisés.

En particulier, sont bien connu des revêtements PVC multicouches qui comprennent une couche support moussée et une couche d'usure.

Habituellement, de tels revêtements de surface multicouches sont élaborés en gélifiant une couche support moussable, sur laquelle est appliquée une couche d'usure, et éventuellement une couche décor. Lors de cette étape, les agents porogènes présents dans la composition de la couche support sont activés et provoquent l'expansion de la couche support en créant de nombreux pores au sein du PVC, ce qui permet d'obtenir une mousse de PVC.

Un revêtement de surface multicouche qui comprend une couche support moussée présente des propriétés acoustiques particulières, des propriétés que les revêtements de surface dits « compacts », donc ou non-moussés, ne possèdent pas.

Il est généralement admis que plus la couche support est moussée et meilleures sont les propriétés acoustiques du revêtement de surface. Ainsi, l'amélioration des performances acoustiques d'un revêtement multicouche moussé se fait habituellement en augmentant l'épaisseur de la mousse ou en agissant sur la structure de la mousse et en particulier sa densité, c'est-à-dire en augmentant sa porosité. Or, cette amélioration des performances acoustiques se fait généralement au détriment des performances mécaniques, et inversement.

De plus, modifier la structure ou l'épaisseur de la mousse PVC nécessite soit de modifier la formulation de la composition de la couche support, soit modifier les conditions opératoires appliquées pour l'expansion de la couche support, et donc les conditions opératoires pour la fabrication du revêtement de surface, voire les deux à la fois.

Ainsi, dès l'or que l'on veut produire des revêtements présentant différentes performances acoustiques, il est alors nécessaire d'adapter les formulations et/ou les conditions opératoires à chaque revêtement spécifique à produire, ce qui nécessite de nombreuses manipulations. Par ailleurs, ces contraintes sont d'autant plus importantes que les revêtements de surface sont généralement élaborés sur une ligne de fabrication en continu. Il est alors nécessaire d'arrêter la ligne de production afin d'effectuer les ajustements nécessaires.

### Buts de l'invention

La présente invention propose un procédé de fabrication d'un revêtement de surface comprenant une couche support moussée qui ne présentent pas les inconvénients de l'état de la technique.

La présente invention propose un procédé de fabrication d'un revêtement de surface qui possède des performances acoustiques et mécaniques améliorées.

### Résumé de l'invention

La présente invention décrit un procédé de fabrication d'un revêtement de surface multicouche comprenant une couche support moussée, à base de PVC, ledit procédé comprenant une étape d'application d'une composition aqueuse comprenant de l'alcool polyvinylique sur la partie inférieure de ladite couche support avant l'étape de moussage de ladite couche support.

Selon des formes particulières de réalisation, le procédé de fabrication selon l'invention comporte une ou plusieurs, ou une combinaison quelconque de plusieurs des caractéristiques suivantes :
- l'application de la composition se fait par impression,
- l'application de la composition se fait sur une largeur de 4 ou 5 mètres,
- la composition est appliquée de manière à former, après séchage, une couche de 0,3 à 1 µm d'épaisseur,
- le procédé comprend en outre une étape dans laquelle est appliqué un primer d'accrochage sur la couche support avant l'application de la composition aqueuse comprenant de l'alcool polyvinylique, ledit primer d'accrochage étant choisi parmi un copolymère comprenant des acides acrylique, une dispersion de polyuréthane, une dispersion de polyisocyantes, un mélange de ces composés, ou un mélange de dispersions de résines acryliques et de PVC.
- la composition comprend en outre un composé silane ou silanol comprenant au moins une fonction amine,
- le composé silane répond à la formule suivante : 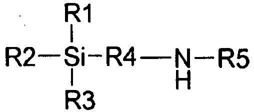 dans laquelle R₁, R₂, R₃ sont, indépendamment les uns des autres, soit un groupement hydroxyle, un groupement méthoxy, ou un groupement éthoxy, et dans laquelle R₄ est un groupement (CH₂)ₙ, n étant égale à 1, 2 ou 3, et dans laquelle R₅ est, indépendamment de R₁, R₂, R₃, un hydrogène, un alkyle linéaire ou cyclique, un phényle, un groupement amide, ou un groupement amino-éthyle de formule -C₂H₄-NH-R₇, R₇ étant un hydrogène, un alkyle, un groupement phényle, un groupement benzyle, ou un groupement vinyl-benzyle,
- le composé silane représente en poids entre 6 et 40 % du poids de l'alcool polyvinylique,
- la composition comprenant de l'alcool polyvinylique est appliquée sur la partie inférieure de la couche de support et la composition comprenant en outre un composé silane comprenant une fonction amine est appliquée sur la partie supérieure de ladite couche de support,
- le procédé comprend en outre une étape d'application d'un film décoratif ou d'une encre décorative sur la partie supérieure de la couche support,
- le procédé comprend en outre une étape d'application d'un vernis de protection à base de polyuréthane sur la couche d'usure.

### Brève description des figures

La figure 1 représente schématiquement un revêtement de surface multicouche comprenant une couche support moussée recouverte d'une couche barrière.

La figure 2 représente schématiquement une seconde forme de réalisation d'un revêtement de surface multicouche comprenant une couche support moussé et une couche barrière.

La figure 3 représente schématiquement une troisième forme de réalisation d'un revêtement de surface multicouche comprenant une couche support moussé et une couche barrière.

La figure 4 représente schématiquement un revêtement de surface multicouche comprenant une couche support moussé, une couche barrière et une couche décor.

La figure 5 représente schématiquement une seconde forme de réalisation d'un revêtement de surface multicouche comprenant une couche support moussé, une couche barrière et une couche décor.

### Description détaillée de l'invention

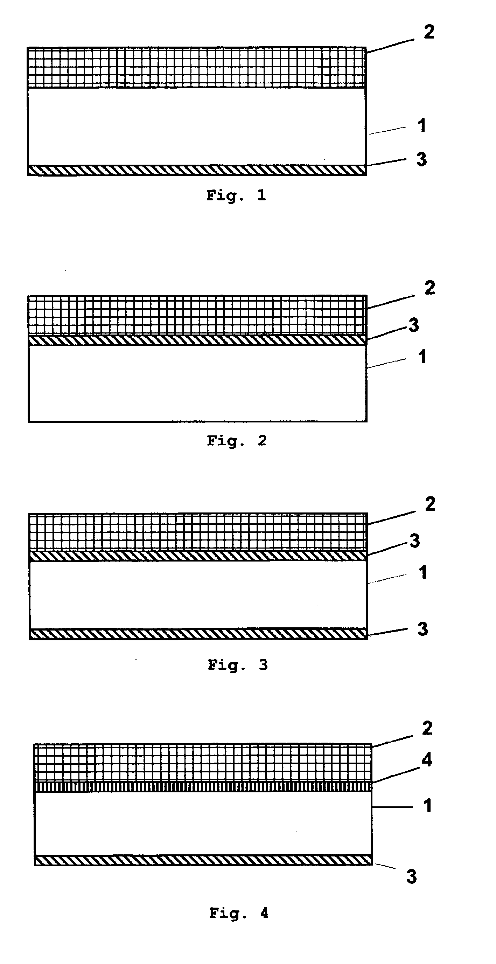

Le procédé de fabrication selon l'invention d'un revêtement de surface comprenant une couche support 1 moussée, qu'il s'agisse d'un revêtement de sol, de mur ou des surfaces intérieures d'un véhicule par exemple, fait intervenir une étape dans laquelle une composition à base d'alcool polyvinylique (PVOH) est appliquée sur au moins la partie inférieure de la couche support 1 (figures 1 et 3).

De préférence, cette étape d'enduction de la couche support se fait soit avant, soit après, la pose de la couche d'usure 2, éventuellement avant ou après la pose d'une couche décorative 4, néanmoins, en tout état de cause, avant l'expansion, ou moussage, de la couche support 1.

De préférence, l'étape d'enduction de la composition d'alcool polyvinylique (PVOH) est intégrée dans un procédé continu de fabrication de revêtement de surface, autant en 2m de large qu'en 4m, et éventuellement en plus grande largeur.

La composition est appliquée sur un film ou une couche à base de PVC, par exemple par impression, par héliogravure ou un dispositif à enduire par rouleau. L'application peut se faire soit sous la forme d'une monocouche, ou éventuellement de plusieurs couches successives. De préférence, la couche formée par la composition à base d'alcool polyvinylique présente, après séchage, une épaisseur de 0,3 à 5 µm.

La composition à base d'alcool polyvinylique est de préférence une solution aqueuse d'alcool polyvinylique. L'eau représente en poids de préférence entre 80 et 96% du poids total de la composition.

La composition peut comprendre en outre un agent mouillant, de préférence un polyether-siloxane. L'agent mouillant représente en poids de préférence 0,4 à 1,5 du poids total de la composition.

Des exemples de compositions sont donnés au tableau 1. La proportion des composants est donnée en pourcentage en poids par rapport au poids de l'alcool polyvinylique (pcr).

**Tableau 1 : exemples de compositions.**

| | **1** | **2** | **3** | **4** |
|---|---|---|---|---|
| EAU | 2400,0 | 809,1 | 400,0 | 809,1 |
| PVOH | 100, 0 | 100,0 | 100,0 | 100,0 |
| Agent mouillant | 0 | 0 | 1,0 | 9,1 |

L'alcool polyvinylique est l'Elvanol^{®} 90-50, l'Elvanol^{®} 71-30, l'Elvanol^{®} 70-75 de Dupont, ou l'Exceval HR 3010, l'Exceval AQ 4104 de Kuraray.

L'agent mouillant est un polyéther polydimethylsiloxane, par exemple le BYK^{®}-307 de BYK, ou le Tego^{®} Wet 270 d'Evonik.

Comme le montre les tableaux 2 et 3, il est apparu de façon surprenante que l'application de la composition à base d'alcool polyvinylique sur la partie inférieure (ou « envers ») (figure 1) de la couche support 1 qui est une couche dite « moussable », avant que l'expansion de la couche support 1 n'ait lieu, permet d'obtenir une meilleure expansion de ladite couche support 1. Ainsi, par l'obtention d'une densité moindre, il est ainsi possible d'utiliser moins de matière dans la couche support 1 pour obtenir une épaisseur de mousse identique ou alternativement un revêtement plus épais pour une même quantité de matière.

**Tableau 2 : Caractéristiques comparées d'un revêtement de surface obtenu par un procédé de l'état de la technique et par le procédé selon l'invention.**

| | Revêtement de surface grainé | Revêtement de surface non grainé | Revêtement de surface selon l'invention | Revêtement de surface non grainé, selon l'invention |
|---|---|---|---|---|
| Epaisseur totale (mm) | 3,23 | 3,22 | 3,69 | 3,65 |
| Grammage (g/m²) | 1776 | 1770 | 1806 | 1800 |
| Epaisseur des couches (mm) | | | | |
| Couche d'usure | 0,09 | 0,09 | 0,09 | 0,11 |
| Couche support | 0,47 | 0,51 | 0,40 | 0,49 |
| Couche support avec voile de verre | 0,40 | 0,39 | 0,41 | 0,46 |
| Couche moussable | 2,23 | 2,20 | 2,75 | 2,65 |
| Raideur Frank (mN) | 351 | 381 | 220 | 239 |
| Retrait 6h80°C (%) | | | | |
| Lo | 0,04 | 0,03 | 0,05 | 0,06 |
| la | 0,04 | 0,03 | 0,10 | 0,10 |
| Curl 6h80°C (mm) | 0,3 | 0 | 0,7 | 0,7 |
| Indentation résiduelle (mm) | 0,27 | 0,24 | 0,22 | 0,28 |
| Souplesse CSTB | 1,95 | 2,05 | 2,51 | 2,47 |
| Accélérométrie (dB) | 23 | 24 | 26 | 27 |

**Tableau 3 : Caractéristiques comparées d'un revêtement de surface obtenu par un procédé de l'état de la technique et par le procédé selon l'invention.**

| | Revêtement de surface | Revêtement de surface selon l'invention |
|---|---|---|
| Epaisseur totale (mm) | 2,62 | 2,67 |
| Grammage (g/m²) | 1550 | 1485 |
| Epaisseur des couches (mm) | | |
| Couche d'usure | 0,10 | 0,13 |
| Couche support | 0,45 | 0,56 |
| Couche support avec voile de verre | 0,27 | 0,34 |
| Couche moussable | 1,78 | 1,63 |
| Raideur Frank (mN) | 361 | 275 |
| Retrait 6h80°C (%) | | |
| Lo | | |
| la | 0,04 | 0,06 |
| | 0,08 | 0,07 |
| Curl 6h80°C (mm) | 0,9 | 0,9 |
| Indentation résiduelle (mm) | 0,12 | 0,03 |
| Souplesse CSTB | 1,69 | 1,67 |
| Accélérométrie (dB) | 21 | 22 |

Par ailleurs, il est couramment admis pour les revêtements de surface comprenant une couche support 1 moussée, que l'amélioration des performances mécaniques de ladite couche support 1, notamment des performances à l'indentation, se fait généralement au détriment des performances acoustiques. Néanmoins, il apparait de façon surprenante que l'application de la composition à base d'alcool polyvinylique sur la couche support 1 moussable améliore d'une part les propriétés acoustiques du revêtement de surface, non seulement par l'augmentation de l'épaisseur de mousse générée, mais également par l'amélioration structurelle de la mousse ainsi obtenue, tout en maintenant ou en améliorant les performances mécaniques du revêtement, notamment la résistance au poinçonnement.

Un avantage supplémentaire réside dans le fait que, sur une ligne de fabrication en continu d'un revêtement de surface, il est alors possible d'agir sur la structure du revêtement, et donc de moduler ses propriétés, sans devoir changer la formulation de la couche support 1, ni changer les conditions opératoires, mais simplement en recouvrant, ou non, la partie inférieure de la couche support 1, à savoir la partie qui va entrer en contact avec la surface à recouvrir, à l'aide de la composition à base d'alcool polyvinylique. Il est également possible de moduler les propriétés du revêtement de surface en faisant varier l'épaisseur de l'application de ladite composition. Ainsi, cela permet un gain en termes de flexibilité industrielle, car il est alors possible de produire sur la même chaine de fabrication, en continue, des revêtements de surface ayant différentes épaisseurs et donc différentes propriétés acoustiques et/ou mécaniques en ne contrôlant que l'application de ladite composition.

Le peu d'adhérence de l'alcool polyvinylique pour un film ou une couche à base de PVC, en particulier pour une couche PVC comprenant des charges inorganiques, ne pose pas de problèmes notables. En effet, l'expansion de la couche support 1 moussable, qui est réalisée de façon conventionnelle sur un tapis métallique, et à l'aide d'agents porogènes, n'est pas perturbée par le fait que l'alcool polyvinylique adhère peu à la couche support 1. De plus, l'alcool polyvinylique possède néanmoins une adhérence suffisante pour permettre le passage sans encombre de la couche support 1 au travers de la ligne de production qui m'est en oeuvre le procédé selon l'invention.

Néanmoins, il peut être avantageux d'augmenter l'adhérence de l'alcool polyvinylique pour la couche support 1 à base de PVC, afin que l'alcool polyvinylique fasse partie intégrante du revêtement de surface et forme une couche barrière 3 contre le passage de contaminants présents sur la surface à recouvrir, par exemple de contaminants provenant d'un sol bitumeux, ou bien de la colle servant à fixer le revêtement sur la surface à recouvrir.

L'adhérence de l'alcool polyvinylique pour la couche support 1 à base de PVC peut être amélioré par l'emploi d'un primer, qui de préférence est un copolymère comprenant des acides acrylique, par exemple le Neocryl^{®} A 1131, ou XK 151 de DSM), une dispersion de polyuréthane, par exemple le Neorez R 989 de DSM), une dispersion de poly-isocyante, par exemple le Bayhydur^{®} VP LS 2240), ou des combinaisons de ces composés. Il est également possible d'utiliser un mélange de dispersions de résines acryliques et de PVC.

L'adhérence de l'alcool polyvinylique pour la couche support 1 à base de PVC peut également être amélioré par l'emploi, dans la composition à base d'alcool polyvinylique, d'un composé silane choisi parmi les composés silanes ou silanols fonctionnalisés, de préférence des composés silanes ou silanols comprenant au moins une fonction amine.

De préférence, le composé silane répond à la formule chimique suivante : 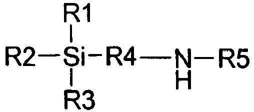 dans laquelle R₁, R₂, R₃ sont, indépendamment les uns des autres, soit un groupement hydroxyle, un groupement méthoxy, ou un groupement éthoxy, et dans laquelle R₄ est un groupement (CH₂)ₙ, n étant égale à 1, 2 ou 3, et dans laquelle R₅ est, indépendamment de R₁, R₂, R₃, un hydrogène, un alkyle linéaire ou cyclique, un phényle, un groupement amide, ou un groupement amino-éthyle de formule -C₂H₄-NH-R₇, R₇ étant un hydrogène, un alkyle, un groupement phényle, un groupement benzyle, ou un groupement vinyl-benzyle.

Le composé silane est choisi parmi le groupe formé par le 3-aminopropyl-triethoxysilane, le 3-aminopropyl-trimethoxysilane, l'aminoethyl-aminopropyl-silane triol, l'aminoethyl-aminopropyl-trimethoxysilane, le N-(2-Aminoethyl)-3-aminopropyl-trimethoxysilane, le N-(2-Aminoethyl)-3-aminopropyl-methyldimethoxysilane, le N-2-(Benzylamino)-ethyl-3-aminopropyl- trimethoxysilane, le N-2-(Vinylbenzylamino)-ethyl-3-aminopropyl- trimethoxysilane, le N-Cyclohexyl-aminomethyl-methyldiethoxysilane, le N-Cyclohexyl-aminomethyl-triethoxysilane, le N-Cyclohexyl-3-aminopropyl-trimethoxysilane, le N-Phenyl-aminomethyl-trimethoxysilane, et le 3-Ureidopropyl-trimethoxysilane, Vinylbenzyl-aminoethyl-aminopropyl-trimethoxy silane.

De préférence, le composé silane fonctionnalisé représente entre 6 et 40 pcr (pourcentage par rapport à l'alcool polyvinylique). Avantageusement, pour une couche moussable à base de PVC, le composé silane fonctionnalisé représente environ 12,5 pcr

Des exemples de compositions sont donnés dans les tableaux 4 et 5. La proportion des composants est donnée en pourcentage en poids par rapport au poids de l'alcool polyvinylique (pcr).

**Tableau 4 : Exemples de composition à base d'alcool polyvinylique comprenant un composé silane fonctionnalisé.**

| | **T** | **5** | **6** | **7** | **8** | **9** |
|---|---|---|---|---|---|---|
| EAU | 809,1 | 809,1 | 809,1 | 809,1 | 809,1 | 809,1 |
| PVOH | 100,0 | 100,0 | 100,0 | 100,0 | 100,0 | 100,0 |
| Sil-1 | 0,0 | 6,0 | 12,5 | 20,0 | 30,0 | 40,0 |
| Agent mouillant | 9,1 | 9,1 | 9,1 | 9,1 | 9,1 | 9,1 |

**Tableau 5 : Exemples de composition à base d'alcool polyvinylique comprenant un composé silane fonctionnalisé**

| | **10** | **11** | **12** | **13** | **14** |
|---|---|---|---|---|---|
| EAU | 809,1 | 809,1 | 809,1 | 809,1 | 809,1 |
| PVOH | 100,0 | 100,0 | 100,0 | 100,0 | 100,0 |
| Sil-2 | 6,0 | 10,0 | 12,5 | 15,0 | 20,0 |
| Agent mouillant | 9,1 | 9,1 | 9,1 | 9,1 | 9,1 |

L'alcool polyvinylique est l'Elvanol^{®} 90-50, l'Elvanol^{®} 71-30, l'Elvanol^{®} 70-75 de Dupont, ou l'Exceval HR 3010, l'Exceval AQ 4104 de Kuraray.

L'agent mouillant est un polyéther polydimethylsiloxane, par exemple le BYK^{®}-307 de BYK, ou le Tego^{®} Wet 270 d'Evonik.

Le composé silane sil-1 est le 3-aminopropyl-triéthoxysilane, par exemple le Z-6011 de Dow Corning^{®}. Le composé silane sil-2 est l'aminoéthyl-aminopropyl-triméthoxysilane, par exemple le Géniosil^{®} GF9 ou GF 91 de Wacker, ou le Z-6020 de Dow Corning^{®}.

La composition comprenant un composé silane est préparée en élaborant un mélange comprenant entre 80 et 95% en poids d'eau, entre 5 et 20% en poids d'alcool polyvinylique, et éventuellement entre 0,4 et 1,5% en poids d'un agent mouillant. Le mélange est préalablement chauffé, par exemple entre 90 et 95°C, avant l'addition à chaud, par exemple à environ 80°C, du composé silane qui représente entre 6 et 20 % en poids (pcr) par rapport à la quantité d'alcool polyvinylique. La composition est laissée sous agitation à environ 95°C pendant environ 60 minutes.

L'adhérence des compositions comprenant un composé silane fonctionnalisé sur une couche PVC moussable est évaluée en application les compositions sous la forme d'une monocouche qui est séchée, par exemple pendant une minute à 100°C, afin de former un film d'environ 1µm d'épaisseur. La méthode d'évaluation consiste à griffer le produit avec un peigne six dents, puis à estimer, à l'aide d'un ruban adhésif du type TESA^{®} 4124, la résistance au pelage. L'adhérence est jugée bonne lorsqu'aucune trace de film n'est arrachée au substrat. Une note « 1 » signifie adhérence est bonne et une note « 3 » signifie aucune adhérence. Les résultats sont présentés aux tableaux 6 et 7.

**Tableau 6 : Adhérence des compositions du tableau 4 sur une couche support moussable à base de PVC.**

| | **T** | **5** | **6** | **7** | **8** | **9** |
|---|---|---|---|---|---|---|
| Couche support moussable en PVC, comprenant des charges | 3 | 1 | 1 | 1 | 1 | 1 |

**Tableau 7 : Adhérence des compositions du tableau 5 sur une couche support moussable à base de PVC.**

| | **T** | **10** | **11** | **12** | **13** | **14** |
|---|---|---|---|---|---|---|
| Couche support moussable en PVC, comprenant des charges | 3 | 3 | 2 | 1 | 1 | 1 |

L'effet barrière de la composition a été évalué par un test au goudron, qui consiste à déposer du goudron liquide sur l'envers d'un revêtement de surface multicouche qui comprend la couche barrière selon l'invention appliquée sous forme humide entre 7 et 45g/m². On laisse migrer le goudron pendant une semaine à une température d'environ 70°C. Une note comprise entre « 1 » et « 5 » est attribuée en fonction de l'apparition d'une tache sur l'endroit du revêtement de sol. « 1 » signifie qu'il n'y a pas de différence avec un revêtement de surface sans goudron, des notes de « 3 » à « 5 » signifient que le revêtement de surface présente a un aspect qui va de brun foncé à noir. Les résultats sont présentés au tableau 8.

**Tableau 8 : Effet barrière.**

| | Pas de couche barrière | **T** | **14** | **14** | **14** | **14** | **14** |
|---|---|---|---|---|---|---|---|
| | | 22g/m² | 7g/m² | 15g/m² | 22g/m² | 35g/m² | 45g/m² |
| support moussable | 5 | 1 | 4 | 3 | 1 | 1 | 1 |

La couche support moussable à base de PVC, qui a été utilisée dans l'évaluation de l'adhérence, comprend 100 pcr de PVC Pevikon^{®} P682 et Pevikon^{®} DP 2170, 117 pcr de carbonate de calcium (Omya BL 20) utilisé comme charge inorganique, 2,9 pcr d'un agent gonflant, un azodicarbonamide (Porofor ADCL-C2), 1,38 pcr d'oxyde de zinc (ZnO) utilisé pour abaisser la température de décomposition de l'agent gonflant, 0,7 pcr de Titane RC 82, 30,3 pcr de DIHP (Jayflex 77), 26,2 pcr de DIBP (Palatinol^{®} IC), et 14,5 pcr d'un hydrocarbure desaromatisé utilisé comme abaisseur de viscosité (Exxsol D100), « pcr » signifiant pourcentage par rapport à la quantité de PVC.

La composition comprenant un composé silane fonctionnalisé peut, dans une première forme de réalisation, être appliquée sur la partie inférieure de la couche support 1, de manière à améliorer l'expansion de la couche support 1 et former une couche barrière 3 (figures 1, 3 à 5).

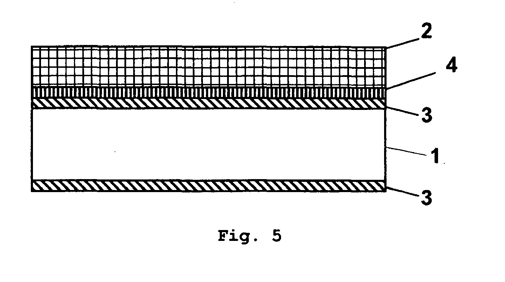

Toutefois, dans une seconde forme de réalisation, la composition comprenant un composé silane fonctionnalisé peut également être appliquée sur la partie supérieure de la couche support 1, la partie sur laquelle va être appliquée la couche d'usure 2 (figures 2, 3 et 5), et éventuellement une couche décorative 4 (figures 4 et 5), ladite couche décorative 4 étant toute couche adéquate, de préférence, une encre ou un film comprenant un ou plusieurs motifs décoratifs. Dans cette seconde forme de réalisation, la composition forme une couche barrière 3 contre la remonté de contaminants présents dans la couche support 1, par exemple de pigments provenant du PVC recyclé éventuellement utilisé dans la composition de la couche support 1. De préférence, la composition est appliquée de façon à former une couche barrière d'une épaisseur d'au moins 4 à 5 µm.

De préférence, la composition comprenant un composé silane fonctionnalisé est appliquée sur la couche support entre 15 et 45g/m² sous forme humide, avantageusement à environ 22g/m², ou environ 35g/m².

De préférence, le procédé de fabrication selon l'invention peut comprendre en outre une étape dans laquelle la couche d'usure 2 est recouverte d'une couche décoratrice.

De préférence, le procédé de fabrication selon l'invention peut comprendre en outre une étape dans laquelle la couche d'usure 2 est recouverte d'un vernis de protection, par exemple à base de polyuréthane.

### Légende :

1 : couche support moussée
2 : Couche d'usure
3 : Couche barrière
4 : Couche décorative

## Revendications

1. Procédé de fabrication d'un revêtement de surface multicouche comprenant une couche support (1) moussée, à base de PVC, ledit procédé comprenant une étape d'application d'une composition aqueuse comprenant de l'alcool polyvinylique sur la partie inférieure de ladite couche support (1) avant l'étape de moussage de ladite couche support (1).

2. Procédé selon la revendication 1, dans lequel l'application de la composition se fait par impression.

3. Procédé selon la revendication 1 ou 2, dans lequel l'application de la composition se fait sur une largeur de 4 ou 5 mètres.

4. Procédé selon l'une quelconque des revendications précédentes, dans lequel la composition est appliquée de manière à former, après séchage, une couche de 0,3 à 5 µm d'épaisseur.

5. Procédé selon l'une quelconque des revendications précédentes, comprenant en outre une étape dans laquelle est appliqué un primer d'accrochage sur la couche support (1) avant l'application de la composition aqueuse comprenant de l'alcool polyvinylique, ledit primer d'accrochage étant choisi parmi un copolymère comprenant des acides acrylique, une dispersion de polyuréthane, une dispersion de poly-isocyantes, un mélange de ces composés ou un mélange de dispersions de résines acryliques et de PVC.

6. Procédé selon l'une quelconque des revendications précédentes, dans lequel la composition comprend en outre un composé silane ou silanol comprenant au moins une fonction amine.

7. Procédé selon la revendication 6, dans lequel le composé silane répond à la formule suivante : 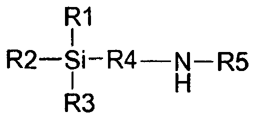 dans laquelle R₁, R₂, R₃ sont, indépendamment les uns des autres, soit un groupement hydroxyle, un groupement méthoxy, ou un groupement éthoxy, et dans laquelle R₄ est un groupement (CH₂)ₙ, n étant égale à 1, 2 ou 3, et dans laquelle R₅ est, indépendamment de R₁, R₂, R₃, un hydrogène, un alkyle linéaire ou cyclique, un phényle, un groupement amide, ou un groupement amino-éthyle de formule -C₂H₄-NH-R₇, R₇ étant un hydrogène, un alkyle, un groupement phényle, un groupement benzyle, ou un groupement vinyl-benzyle.

8. Procédé selon la revendication 6 ou 7, dans lequel le composé silane représente en poids entre 6 et 40% du poids de l'alcool polyvinylique.

9. Procédé selon l'une quelconque des revendications 6 ou 8, dans lequel la composition comprenant de l'alcool polyvinylique est appliquée sur la partie inférieure de la couche de support (1) et la composition comprenant en outre un composé silane comprenant une fonction amine est appliquée sur la partie supérieure de ladite couche de support (1).

10. Procédé selon l'une quelconque des revendications précédentes, comprenant en outre une étape d'application d'un film décoratif ou d'une encre décorative sur la partie supérieure de la couche support (1).

11. Procédé selon l'une quelconque des revendications précédentes, comprenant en outre une étape d'application d'un vernis de protection à base de polyuréthane sur la couche d'usure (2).

## Patentansprüche

1. Verfahren zur Herstellung einer mehrschichtigen Oberflächenbeschichtung mit einer verschäumten Trägerschicht (1) auf Basis von PVC, bei dem man vor dem Verschäumen der Trägerschicht (1) auf den unteren Teil der Trägerschicht (1) eine wässrige Zusammensetzung, die Polyvinylalkohol umfasst, aufbringt.

2. Verfahren nach Anspruch 1, bei dem das Aufbringen der Zusammensetzung durch Drucken erfolgt.

3. Verfahren nach Anspruch 1 oder 2, bei dem das Aufbringen der Zusammensetzung auf einer Breite von 4 oder 5 Meter erfolgt.

4. Verfahren nach einem der vorhergehenden Ansprüche, bei dem die Zusammensetzung so aufgebracht wird, dass sie nach Trocknung eine Schicht mit einer Dicke von 0,3 bis 5 µm bildet.

5. Verfahren nach einem der vorhergehenden Ansprüche, bei dem man ferner vor dem Aufbringen der wässrigen Zusammensetzung, die Polyvinylalkohol umfasst, einen Haftprimer auf die Trägerschicht (1) aufbringt, wobei der Haftprimer aus einem Copolymer, das Acrylsäuren umfasst, einer Polyurethandispersion, einer Polyisocyanatdispersion, einer Mischung dieser Verbindungen oder einer Mischung von Dispersionen von Acrylharzen und PVC ausgewählt wird.

6. Verfahren nach einem der vorhergehenden Ansprüche, bei dem die Zusammensetzung außerdem eine Silan- oder Silanolverbindung mit mindestens einer Aminfunktion umfasst.

7. Verfahren nach Anspruch 6, bei dem sie Silanverbindung der folgenden Formel entspricht: 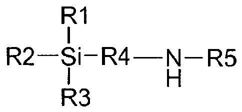 worin R₁, R₂ und R₃ unabhängig voneinander für eine Hydroxylgruppe, eine Methoxygruppe oder eine Ethoxygruppe stehen und R₄ für eine (CH₂)ₙ-Gruppe steht, wobei n gleich 1, 2 oder 3 ist, und R₅ unabhängig von R₁, R₂ und R₃ für Wasserstoff, lineares oder cyclisches Alkyl, Phenyl, eine Amidgruppe oder eine Aminoethylgruppe der Formel -C₂H₄-NH-R₇ steht, wobei R₇ für Wasserstoff, Alkyl, eine Phenylgruppe, eine Benzylgruppe oder eine Vinylbenzolgruppe steht.

8. Verfahren nach Anspruch 6 oder 7, bei dem die Silanverbindung zwischen 6 und 40 Gewichtsprozent, bezogen auf das Gewicht des Polyvinylalkohols, ausmacht.

9. Verfahren nach einem der Ansprüche 6 oder 8, bei dem die Zusammensetzung, die Polyvinylalkohol umfasst, auf den unteren Teil der Trägerschicht (1) aufgebracht wird und die Zusammensetzung, die außerdem eine Silanverbindung mit einer Aminfunktion umfasst, auf den oberen Teil der Trägerschicht (1) aufgebracht wird.

10. Verfahren nach einem der vorhergehenden Ansprüche, bei dem man ferner auf den oberen Teil der Trägerschicht (1) einen dekorativen Film oder eine dekorative Tinte aufbringt.

11. Verfahren nach einem der vorhergehenden Ansprüche, bei dem man ferner auf die Verschleißschicht (2) einen Schutzlack auf Polyurethanbasis aufbringt.

## Claims

1. A method for manufacturing a multilayer surface covering comprising a PVC-based expanded support layer (1), said method comprising a step of applying an aqueous composition comprising polyvinyl alcohol on the bottom portion of said support layer (1) prior to the expansion of said supporting layer (1).

2. The method according to claim 1, wherein the applying of the composition is done by printing.

3. The method according to claim 1 or 2, wherein the applying of the composition is done over a width of 4 or 5 meters.

4. The method according to any of the preceding claims wherein the composition is applied to form, after drying, a layer 0.3 µm to 5 µm thick.

5. The method according to any of the preceding claims, further comprising a step wherein an adhesion-promoting primer is applied to the support layer (1) prior to the application of the aqueous composition comprising polyvinyl alcohol, said adhesion-promoting primer being selected from a copolymer comprising acrylic acids, a polyurethane dispersion, a dispersion of polyisocyantes, a mixture of these compounds, or a mixture of PVC and acrylic resin dispersions.

6. The method according any of the preceding claims, wherein the composition further comprises a silanol or silane compound bearing at least one amine function.

7. The method according to claim 6, wherein the silane compound has the following formula: 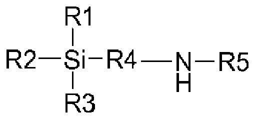 wherein R₁, R₂, R₃ are, independently from each other, either a hydroxyl group, a methoxy group, or a ethoxy group, and wherein R₄ is a (CH₂)ₙ group, n being equal to 1, 2 or 3, and wherein R₅ is, independently of R₁, R₂, R₃, a hydrogen, a linear or cyclic alkyl, a phenyl, an amide group, or an amino-ethyl group of the formula -C₂H₄-NH-R₇, R₇ being a hydrogen, an alkyl, a phenyl group, a benzyl group, or a vinyl-benzyl group.

8. The method according to claim 6 or 7, wherein the silane compound represents between 6% and 40% by weight of the total weight of the polyvinyl alcohol.

9. The method according to either of claims 6 or 8, wherein the composition comprising polyvinyl alcohol is applied to the bottom portion of the support layer (1) and the composition further comprising a silane compound comprising one amine function is applied to the top portion of said support layer (1).

10. The method according to any of the preceding claims, further comprising a step of applying a decorative film or decorative ink on the top portion of said support layer (1).

11. The method according to any of the previous claims, further comprising a step of applying a polyurethane-based protective varnish on the wear layer (2).
